# EUROPEAN PATENT SPECIFICATION

(11) **EP 0 305 091 B1**
(45) Date of publication and mention of the grant of the patent: **11.01.1995**
(21) Application number: 88307465.0
(22) Date of filing: 11.08.1988
(51) Int. Cl.: C08F 228/02, C08F 8/12

(54) **Process for preparing a copolymer in the form of beads and uses thereof**
Verfahren zur Herstellung von Copolymeren in Perlform und deren Verwendung
Procédé de préparation de copolymères en forme de perle et leur usage

(30) Priority: 27.08.1987 GB 8720271
(43) Date of publication of application: 01.03.1989
(73) Proprietor: THE BRITISH PETROLEUM COMPANY P.L.C., London EC2M 7BA (GB)
(72) Inventor: Atkins, Martin Philip, Sunbury-on-Thames Middlesex TW16 7LN (GB); Green, Michael James, Sunbury-on-Thames Middlesex TW16 7LN (GB); Lindsay, Derek, Sunbury-on-Thames Middlesex TW16 7LN (GB); Tinley, Edward John, Sunbury-on-Thames Middlesex TW16 7LN (GB)
(74) Representative: Denbigh, Keith Warwick

(56) References cited:
- FR-A- 1 584 444
- GB-A- 1 499 783
- CHEMICAL ABSTRACTS, vol. 102, no. 26, 1st July 1985, page 5, abstract 221265s,Columbus, Ohio, US; L. FEISTEL et al.: "Polymers of vinylsulfonic acid and itsderivatives. II. Suspension copolymerization of vinylsulfonyl fluoride withdivinylbenzene"
- CHEMICAL ABSTRACTS, vol. 57, no. 10, 1962, column 12714, paragraph f,g,Columbus, Ohio, US; M. NISHIMURA et al.: "Preparation of homogeneous ion-selective membranes of the poly(vinylsulfonic acid) type"

## Description

The present invention relates in general to ion-exchange resins, and in particular to cation-exchange resins, and their uses.

Ion-exchange materials may be broadly defined as insoluble matrices containing labile ions capable of exchanging with ions in the surrounding medium without any major physical change taking place in their structure. Synthetic ion-exchange resins date back to 1935 when Adams and Holmes conceived that synthetic cation-exchange materials could be based on the insoluble phenol-formaldehyde resins. The next development in the art was the provision of non-phenolic resins for both cation and anion exchange with a cross-linked polystyrene matrix, followed by polyacrylic cation resins and polyacrylic anion resins. Cross-linking in the polystyrene matrix is usually effected by the addition of divinylbenzene (DVB) in an amount normally varying between 1 and 20%. A later development was the introduction of 'macroporous' resins in which the 'gel' structure of the earlier resins contain relatively large holes separated by cross-linked regions thereby providing a more open structure allowing a tougher and denser polystyrene to be used. Ion-exchange resins are manufactured by, for example, the Rohm and Haas Company and the Dow Chemical Company, the products being sold under the trade marks "Amberlyst" and "Dowex" respectively. Currently available styrene-divinylbenzene-based ion-exchange resins suffer from the disadvantage that they are thermally unstable at temperatures in excess of about 150°C, which restricts their usage. It is therefore recognised as a desirable objective in the art to produce ion-exchange resins having a higher thermal stability.

We have now found that this objective can be achieved by copolymerising a vinyl sulphonic acid ester derivative with a polyethylenically unsaturated compound, for example DVB, according to claim 1 to provide the copolymer in bead form. The polymerisation of vinyl sulphonic acids is not new. Thus, for example USP 2,348,705 discloses the homo- and copolymerisation of ethylenesulphonic acid, Japanese Application Patent No. 4195 ('58) discloses the polymerisation of a mixture of methyl ethylenesulphonate, divinyl benzene and benzoyl peroxide to produce a resin which is powdered and heated with KOH overnight to an give an insoluble resin, and in JACS, 72, 1950, pages 4864 to 4866, Overberger et al describe the copolymerisation of butyl vinylsulphonate with vinyl acetate, vinyl chloride, styrene, methyl acrylate and vinylidene chloride. None of the aforesaid references described resin beads, a form of the resin having more desirable physical properties e.g. porosity than other forms, for example sheets and powders. Plaste Kautschuk 1985, 32(4) Pages 134-136 describes the polymerisation of vinylsulfonylfluoride with divinylbenzene to produce copolymers which are saponified.

According to the present invention, a copolymer is prepared by in a first step copolymerising a derivative of a vinyl sulphonic acid chemically convertible to the sulphonic acid and a polyethylenically unsaturated monomer and in a second step chemically converting the derivative of the vinyl sulphonic acid in the copolymer so-formed in bead form to the vinyl sulphonic acid, as defined in claim 1.

Suitable polyethylenically unsaturated monomers include for example divinylbenzene, divinylpyridine, divinyltoluenes, divinylnaphthalenes, diallyl phthalate, ethylene glycol diacrylate, ethylene glycol dimethacrylate, and 1,3-butanediol dimethacrylate. Preferred polyethylenically unsaturated monomers, otherwise known as "cross-linkers" include polyvinylaromatic hydrocarbons such as divinylbenzene and trivinylbenzene, glycol dimethacrylates, such as ethylene glycol dimethacrylate, and polyvinyl ethers of polyhydric alcohols such as divinyloxyethane and trivinyloxypropane. A particularly preferred polyethylenically unsaturated monomer is divinylbenzene.

The product may suitably incorporate from 1 to 99% by weight of the polyethylenically unsaturated monomer, typically sufficient to result in about 7% b.w. sulphur in the copolymer. The amount in the product does not necessarily correspond to the amount employed in the reaction mixture, which will depend amongst other things upon the reactivity ratios of the monomers being polymerised and the amount desired in the final copolymer. Suitable amounts to produce any desired degree of cross-linking may be readily determined by persons skilled in the art.

As regards the vinyl sulphonic acid derivative chemically convertible to the sulphonic acid, these are represented by the formula:-

R¹ - CH = CH - SO₂OR² (I)

wherein R¹ is either H, alkyl, for example C₁ to C₆ alkyl, substituted alkyl, cycloalkyl, for example cyclohexyl, or aryl, for example phenyl, and
R² is either alkyl, for example C₁ to C₆ alkyl, cycloalkyl, for example cyclohexyl, or aryl, for example phenyl.

Suitably R² may be C₁ to C₆ alkyl. Preferably R² is phenyl or substituted phenyl. R¹ is preferably H.

The derivative of the vinyl sulphonic acid chemically convertible to the sulphonic acid is a derivative which is convertible by hydrolysis to the vinyl sulphonic acid.

The hydrolysable derivative is one of the formula (I) wherein R² is alkyl, cycloalkyl or aryl, ie. an ester derivative. Suitable esters of vinyl sulphonic acids include the lower alkyl esters, for example methyl, ethyl, propyl or butyl esters. Preferred esters are the phenyl and substituted phenyl esters. Hydrolysis may be accomplished by contacting the hydrolysable derivative with a hydrolysing agent under hydrolysis conditions. The hydrolysing agent is either an acid or a base. Suitable acids include the mineral acids, for example hydrochloric acid. Suitable bases include inorganic bases, for example sodium or potassium hydroxide. Using acid hydrolysis an ester derivative for example is converted in a single step to the sulphonic acid group. Using base hydrolysis, in a first step a salt of the sulphonic acid is formed, which upon acidification in a second step gives the free acid grouping.

We have surprisingly found that the degree of hydrolysis can be greatly increased by effecting the hydrolysis in the presence of ultrasound. It is therefore preferred to effect the hydrolysis in the presence of ultrasound.

Sonochemistry is the science of chemical reactions which are effected by the presence of a sufficiently intense sonic or ultrasonic field. For a useful review of the subject reference may be made to an article entitled 'Ultrasound in Synthesis' by Kenneth S. Springer, Verlag Berlin Heidelberg 1986.

As regards the equipment required for ultrasonics, to generate ultrasonic waves in a liquid it is necessary to cause some element in contact with the liquid to vibrate at the required frequency. The complete system generally comprises an ultrasonic transducer, a drive unit or generator to activate the transducer and a means for transmitting the vibrations to the liquid. Since the vibrations of the transducer element are small, a mechanical amplifier (or horn) is often required between the element and the liquid, thus forming a compound transducer. A most efficient method of transmitting into the liquid is by direct insertion of the transducer into the liquid, but indirect drive may also be used, for example, as in an ultrasonic cleaning bath, where a transmitting material is interposed between the transducer and the liquid. Electrically driven transducers are either piezoelectric or magnetostrictive the latter generally being less efficient, but more robust, than the former. Ultrasonic equipment based on mechanical vibrations induced by the movements of a fluid is available and has primarily been used for such purposes as emulsification and atomization. Suitable equipment may be obtained from, for example, Lucas Dawe Ultrasonics Limited, Roth Scientific Company Limited and Life Science Laboratories Limited.

Low or high power ultrasound can be used. Preferably the intensity of the ultrasound is below the cavitational threshold of the liquid media employed.

The amount of ultrasonic energy required will depend on a number of factors including the nature of the reactants and will be readily determinable by a person skilled in the art.

The copolymer beads produced by the process of the present invention may be used for the same purposes as prior art cation-exchange resins. However, as previously mentioned, their higher thermal stability considerably extends their range of usage. Besides their use as cation-exchange resins, they are particularly useful as catalysts. In acidic form, they may be used as catalysts in a wide variety of proton-catalysed reactions. Such reactions include, for example:-
(i) a process for the production of an ether by reacting either an olefin or an olefin oxide with an alcohol,
(ii) a process for the production of an alkyl aromatic compound by reacting an aromatic hydrocarbon with an alkylating agent selected from alcohols and olefins,
(iii) a process for the production of an alcohol by reacting an olefin with water, or
(iv) a process for the production of an ester by reacting either an olefin or an olefin oxide with a carboxylic acid,
(v) a process for the production of an ester by reacting an alcohol with a carboxylic acid.

Suitable reactants and reaction conditions for operating the processes (i) to (v) are described in EP-A-0083970.

A preferred process comprises reacting a C₄ to C₇ monoolefin, or a mixture thereof, with an alcohol at elevated temperature to produce an ether.

Although any C₄ to C₇ monoolefin may be employed, it is preferred to use either isobutene, which may be substantially pure or may contain monoolefins and/or paraffins, or a pentene, for example a methylbutene, which may be substantially pure or may be admixed with lower or higher monoolefins, for example butenes, including isobutenes, or hexenes and/or paraffins.

Suitably the alcohol may be an alkanol, for example methanol, ethanol, propanols, butanols, pentanols or hexanols, preferably methanol.

A preferred reaction is that of isobutene with methanol to produce tertiary butyl methyl ether (MTBE). Another preferred reaction is that of methylbutenes with methanol to produce a tertiary amyl methyl ether (TAME). A preferred source of monoolefin reactants is the refinery stream generally referred to a Light Cat Cracked Spirit (LCCS), itself derived from the catalytic cracking of heavier petroleum fractions, normally boiling in the range from 350 to 550°C, to lighter products.

The reaction of the monoolefin with methanol may suitably be operated at a temperature in the range from 40 to 120°C and a pressure in the range from 4 to 80 bar gauge. The process may be operated either in the liquid or the vapour phase, preferably in the liquid phase, suitably using the catalyst in the form of a fixed bed.

The olefin to alcohol molar ratio may range from olefin rich to alcohol rich, e.g. a molar range from 10:1 to 1:10. Operating olefin-rich simplifies the product recovery since there can be high conversion of the alcohol and negligible azeotrope formation. However, an excess of olefin may encourage undesirable side reactions such as olefin dimerisation or oligomerisation, and to avoid this it is sometimes preferred to operate alcohol rich or to adhere strictly to the stoichiometric olefin:alcohol molar ratio.

The aforesaid reactions (i) to (iv) are only illustrative of the type of proton-catalysed reaction which is catalysable by the resins of the present invention and are not in any way intended to be exhaustive.

For catalytic purposes, the cation-exchange resins of the present invention may also be exchanged with metal cations, for example Group VIII metal cations.

One consequence of the enhanced thermal stability of the resin is that it allows the production of dual function catalysts, for example an acidic form of the resin loaded with a metal having hydrogenating activity, for example palladium, by direct impregnation of the acidic resin with a solution of a soluble metal compound followed by reduction of the metal compound to the elemental metal. It is not generally possible to accomplish this with conventional resins because the temperatures necessary to reduce the metal compound to the elemental metal, typically about 200°C for palladium, result in thermal degradation of the resin. Catalysts of this type, for example the hydrogen form of the resin loaded with elemental palladium, are useful in the production of ethers.

The invention will now be further illustrated by reference to the following Examples.

### Preparation of the Cation-exchange Resin in Bead Form

### Example 1

### (a) Suspension Polymerisation to give the second copolymer.

A mixture of boric acid (6g), hydroxyethyl cellulose (24 ml, 0.17% aqueous solution) and water (252 ml) was adjusted to pH 10.3 with sodium hydroxide (50% aqueous solution). To this was added xanthum gum (100 ml, 0.3% aqueous solution) and sodium chloride (80 g). The resulting mixture was stirred at 275 r.p.m. in a baffled pot (1 litre), using an axial impeller, and heated to 80°C.

The monomer mixture consisting of the propyl ester of vinyl sulphonic acid (30 ml), commercial divinylbenzene (20 ml, 55% DVB), 2-ethyl hexanol (50 ml) and AIBN (0.5 g) was added to the stabiliser solution above. Stirring at 80°C was continued for 5 hours. The resulting resin beads were filtered off, washed with water and acetone, extracted for 4 hours in a Soxhlet apparatus with acetone and dried in a vacuum oven at 40°C.

### (b) Hydrolysis of the Resin to give the first copolymer.

(i) Resin beads (50g) from (a) above were placed in a 1 litre pot with methanol (300 ml) and concentrated hydrochloric acid (5M) (200 ml). This mixture was stirred and refluxed at 75°C for 15 hours. The resulting beads were filtered off and washed thoroughly with water.
(ii) Example 1 (b) (i) was repeated except that the reflux temperature employed was 80°C instead of 75°C and reflux was continued for 16 hours instead of 15 hours. The degree of hydrolysis of the ester groups to acid groups was 53%.
(iii) Example i (b) (ii) was repeated using IM NaOH instead of 5M HCl. The degree of hydrolysis of the ester groups to acid groups was about 50%.
(iv) Resin beads (50g) from Example 1 (a) were placed in a 1 litre pot with 0.1M NaOH (500 ml). Ultrasound (28.6 W/cm²) was applied to the mixture at 50°C. Cavitation occured and resin particles (bulk) abraded. The degree of hydrolysis of the ester groups to acid groups was 86%.
(v) Example 1 (b) (iv) was repeated except that the intensity of the applied ultrasound was reduced to 14.0 W/cm² and the ultrasound was applied for one hour. The cavitation threshold was not exceeded and only a very light dusting of resin particles was observed. The degree of hydrolysis of ester groups to acid groups was 77%.
(vi) By changing the Horn arrangement a more efficient stirring was obtained. At a lower power input (7.9 W/cm²) 84% hydrolysis was obtained. The resin particles were not abraded.
(vii) Using an ultrasonic cleaning bath 78% hydrolysis was obtained after 1 hour at 50°C.

### Example 2

Example 1(a) and (b) were repeated except that in (a) a stabiliser solution consisting of methyl cellulose (20 ml, 2% aqueous solution) and water (380 ml) was used.

### Testing of Resin as Catalyst

### Example 3

### Production of Methyl Tertiary Butyl Ether (MTBE)

The production of MTBE was monitored over a range of temperatures using the vinyl sulphonic acid/DVB copolymer resin of the present invention as catalyst, a comparison being made under identical conditions with a commercially available cation-exchange resin (Amberlyst® 15).

The feed consisted of 75% wt. raffinate-2 (a C₄ refinery stream principally containing butene-1, butene-2 and butane) and 25% wt. isobutene/methanol mixture at a 1:1 isobutene:methanol molar ratio.

The feed was passed over a 15 ml catalyst bed at a pressure of 15 bar and an LHSV of 2, over a range of temperatures. The MTBE yield was determined by on-line analysis. Dimethyl ether (DME) formation was determined by GCMS.

The results are given in the accompanying Table 1.

**Table 1**

| Temperature (°C) | MTBE in products (wt %) | | Dimethyl ether in products (ppm) | |
|---|---|---|---|---|
| | Resin of the invention (Ex 1) | Amberlyst 15 | Resin of the invention (Ex 1) | Amberlyst 15 |
| 60 | 3.6 | 6.4 | - | - |
| 75 | 13.3 | 19.4 | - | - |
| 80 | 18.3 | 20.2 | - | 200 |
| 88 | 22.1 | 19.0 | 160 | - |
| 95 | 14.3 | 4.8 | - | - |

From the results presented in the Table it can be seen that:
(i) The optimum temperature of operation for the resin of the invention is about 88°C for MTBE production, whereas that of Amberlyst 15 is about 75-80°C.
(ii) At its optimum temperature the resin of the invention gives better conversion to MTBE than Amberlyst 15.
(iii) The resin of the invention gives lower levels of DME by-product than Amberlyst 15 at their optimum operating temperatures.

### Thermal Stability of the Resin

### Example 4

The thermal stability of a resin according to the invention was investigated by measuring the amount of acid leached from the resin during thermolysis and determining the activity of the resultant resin in the catalysis of methanol - acetic acid esterification.

The ion-exchange resin (0.50 g) and water (50 cm³) were placed in a Fischer-Porter bottle which was then purged with nitrogen, sealed and heated in an oil bath at the required temperature for 72 hours. The mixture was cooled, filtered through a sintered-glass funnel. The filtrate was titrated with 0.01M NaOH using phenolphthalein as indicator. Results are shown in Table 2.

Ion-exchange resin (0.100 g), acetic acid (6.5 g), methanol (3.5 g) and cyclohexane (0.5 g) were placed in a sealable glass vessel fitted with a magnetic stirrer follower. This was immersed in a water bath at 50°C, the reaction mixture being stirred continuously. At 30 minute intervals the vessel was cooled in an ice/water bath and a sample removed for analysis by gas-liquid chromatography. Reaction progress was measured by the growth of the methyl acetate peak relative to the cyclohexane internal standard. Results are given in Table 2.

**Table 2**

| Resin | Thermolysis | Acid Loss (mmol/g of Resin) | Progress of Esterification after 3h (%) |
|---|---|---|---|
| Resin of the Invention | 120°C/72h | 0.07 | 39.5 |
| Resin of the Invention | 150°C/72h | 0.05 | 39.6 |
| Resin of the Invention | 185°C/72h | 0.12 | 44.8 |
| Resin of the Invention | 218°C/72h | 0.25 | 28.8 |
| Resin of the Invention | - | - | 32.7 |
| No Resin | - | - | 9.0 |

## Claims

1. A process for preparing a copolymer, in the form of beads, of a vinyl sulphonic acid and a polyethylenically unsaturated monomer which comprises the steps of:
(1) copolymerising, by suspension copolymerisation, (a) a vinyl sulphonic acid derivative of the formula:
R¹ - CH = CH ― SO₂ OR²
wherein R¹ is selected from hydrogen, alkyl, substituted alkyl, cycloalkyl and aryl and R² is selected from alkyl, cycloalkyl or aryl with (b) a polyethylenically unsaturated monomer, and
(2) thereafter hydrolysing the product of step (1) with either an acid or a base.

2. A process as claimed in claim 1 wherein R² is selected from C₁ to C₆ alkyl, phenyl or substituted phenyl.

3. A process as claimed in claim 1 or claim 2 wherein R¹ is hydrogen.

4. A process as claimed in any one of claims 1 to 3 wherein the polyethylenically unsaturated monomer is selected from a polyvinylaromatic hydrocarbon, a glycol dimethacrylate or a polyvinyl ether of a polyhydric alcohol.

5. A process as claimed in claim 4 wherein the polyethylenically unsaturated monomer is divinylbenzene.

6. A process as claimed in any one of claims 1 to 5 wherein step (2) is effected in the presence of ultrasound.

7. Use of the copolymer product of the process of any one of claims 1 to 6 as a cation exchange resin.

8. Use of the copolymer product of the process of any one of claims 1 to 6 as a catalyst in a proton catalysed reaction.

9. Use of copolymer product of the process of any one of claims 1 to 6 as a catalyst for producing tertiary butyl methyl ether by reaction of isobutene with methanol.

## Patentansprüche

1. Verfahren zur Herstellung eines Copolymeren in Perlform aus einer Vinylsulfonsäure und eines polyethylenisch ungesättigten Monomeren, das die folgenden Schritte umfaßt:
(1) Copolymerisation, durch Suspensions-Copolymerisation, (a) eines Vinylsulfonsäure-Derivats der Formel:
R¹ - CH = CH - SO₂OR²
worin R¹ ausgewählt ist unter einem Wasserstoffatom, einer Alkyl-, substituierten Alkyl-, Cycloalkyl- und Arylgruppe und R² ausgewählt ist unter einer Alkyl-, Cycloalkyl- oder Arylgruppe, mit (b) einem polyethylenisch ungesättigten Monomer und
(2) anschließende Hydrolyse des Produktes aus Schritt (1) entweder mit einer Säure oder einer Base.

2. Verfahren, wie in Anspruch 1 beansprucht, bei dem R² ausgewählt ist unter einer C₁- bis C₆-Alkyl-, Phenyl- oder substituierten Phenylgruppe.

3. Verfahren, wie in Anspruch 1 oder Anspruch 2 beansprucht, bei dem R¹ ein Wasserstoffatom ist.

4. Verfahren, wie in irgendeinem der Ansprüche 1 bis 3 beansprucht, bei dem das polyethylenisch ungesättigte Monomer ausgewählt ist unter einem polyvinylaromatischen Kohlenwasserstoff, einem Glykoldimethacrylat oder einem Polyvinylether eines mehrwertigen Alkohols.

5. Verfahren, wie in Anspruch 4 beansprucht, bei dem das polyethylenisch ungesättigte Monomer Divinylbenzol ist.

6. Verfahren, wie in irgendeinem der Ansprüche 1 bis 5 beansprucht, bei dem Schritt (2) in Gegenwart von Ultraschall ausgeführt wird.

7. Verwendung des Copolymerproduktes aus dem Verfahren nach irgendeinem der Ansprüche 1 bis 6 als Kationenaustauscherharz.

8. Verwendung des Copolymerproduktes aus dem Verfahren nach irgendeinem der Ansprüche 1 bis 6 als Katalysator für eine protonenkatalysierte Reaktion.

9. Verwendung des Copolymerproduktes aus dem Verfahren nach irgendeinem der Ansprüche 1 bis 6 als Katalysator für die Herstellung von tert-Butylmethylether durch Reaktion von Isobuten mit Methanol.

## Revendications

1. Procédé de préparation d'un copolymère, sous forme de perles, d'un acide vinylsulfonique et d'un monomère à insaturation polyéthylénique, qui comprend les étapes :
(1) de copolymérisation, par copolymérisation en suspension, (a) d'un dérivé d'acide vinylsulfonique de formule :
R¹ - CH = CH - SO₂OR² (I)
dans laquelle R¹ est choisi entre l'hydrogène, un groupe alkyle, un groupe alkyle substitué, un groupe cycloalkyle et un groupe aryle, et R² est choisi entre un groupe alkyle, un groupe cycloalkyle et un groupe aryle, avec (b) un monomère à insaturation polyéthylénique, et
(2) l'hydrolyse du produit de l'étape (1) avec un acide ou une base.

2. Procédé suivant la revendication 1, dans lequel R² est choisi entre un groupe alkyle en C₁ à C₆, phényle ou un groupe phényle substitué.

3. Procédé suivant la revendication 1 ou la revendication 2, dans lequel R¹ représente l'hydrogène.

4. Procédé suivant l'une quelconque des revendications 1 à 3, dans lequel le monomère à insaturation polyéthylénique est choisi entre un hydrocarbure polyvinylaromatique, un diméthacrylate de glycol et un éther polyvinylique d'un alcool polyhydroxylique.

5. Procédé suivant la revendication 4, dans lequel le monomère à insaturation polyéthylénique est le divinylbenzène.

6. Procédé suivant l'une quelconque des revendications 1 à 5, dans lequel l'étape (2) est mise en oeuvre en présence d'ultrasons.

7. Utilisation du produit copolymérique du procédé suivant l'une quelconque des revendications 1 à 6 comme résine échangeuse de cations.

8. Utilisation du produit copolymérique du procédé suivant l'une quelconque des revendications 1 à 6 comme catalyseur dans une réaction catalysée par des protons.

9. Utilisation du produit copolymérique du procédé suivant l'une quelconque des revendications 1 à 6 comme catalyseur pour la production d'éther de tertiobutyle et de méthyle par réaction d'isobutène avec du méthanol.
